# EUROPEAN PATENT SPECIFICATION

(11) **EP 0 784 434 B1**
(45) Date of publication and mention of the grant of the patent: **16.12.1998**
(21) Application number: 95934104.1
(22) Date of filing: 22.09.1995
(51) Int. Cl.: A21D 6/00, A21D 2/18, A21D 2/26

(54) **READY-TO-BAKE BRIOCHE DOUGHS**
HEFEKUCHENTEIG FERTIG ZUM AUFBACKEN
PATE A BRIOCHE PRETE A CUIRE

(30) Priority: 27.09.1994 EP 94202776
(43) Date of publication of application: 23.07.1997
(73) Proprietor: UNILEVER N.V., 3013 AL Rotterdam (NL); UNILEVER PLC, London EC4P 4BQ (GB)
(72) Inventor: ORTIZ, Angel, 08480 L'Ametlla des Valles (ES); SANDERS, Johannes Cornelis, 3137 AJ Vlaardingen (NL)
(74) Representative: Sikken, Antonius H. J. M.
(86) International application number: EP9503752
(87) International publication number: WO9609769

(56) References cited:
- EP-A- 0 265 003
- EP-A- 0 305 105
- WO-A-93/22928
- GB-A- 2 252 892

## Description

In order to come to more convenient dough-systems, that enables a baker to prepare a dough on one day and to bake a dough-product made from it on a later day, several solutions have been given in the prior art. In our European Patent 493,850 we have disclosed preproofed, frozen croissants that can be baked without thawing, that contain a gelatin-relating compound in order to retain the CO₂, developed by the proofing in the frozen dough-system. Above products however, mean that a proofing-process has still to be performed resulting in frozen, proofed dough-systems that are very vulnerable during transportation. Moreover the total volume that must be transported is higher for proofed than for unproofed doughs.

An even more convenient solution would be, if dough systems could be found that contain a leavener, such as yeast, but that do not need to be preproofed. After freezing of the dough-system it should be possible to obtain baked products with good specific volume and ovenspring without thawing and proofing of the dough system prior to baking. In the prior art some solutions, suitable for laminated doughs are disclosed, which would lead to such so called ready-to-bake laminated dough systems. E.g. in WO 92/18010 or DE 4,118,024 laminated dough-systems are disclosed, wherein a dough is made from flour, yeast and liquid, the dough is kneaded and laminated with fat. Essential is that the fat is not present in the dough, but is only incorporated in the laminated product as laminate-fat. We found that above process leads to laminated products that display slightly better specific volumes and ovenspring than products made according to the more conventional techniques. However, the s.v. and ovenspring of the products were still inacceptably low for the baker and the consumer. Another solution was presented in EP 561,702. According to this patent-application ready-to-bake frozen croissants were made, wherein the total amount of fat-layers was greater than 50. Those products can contain three additives, i.e.
- an acidifier
- a thickener or gelatinizing agent
- a lipolytic enzyme.
As examples of the thickeners and gelatinizing agents are mentioned: carboxymethyl cellulose (also illustrated in the example), guar gum, xanthan or alginate. We found that laminated products made according to this EP-application did not yet meet the standards set by the baker and the consumer.

In our copending European patent application 93203627.0 we disclose ready-to-bake, frozen, laminated doughs that display upon baking (without thawing and proofing) an ovenspring of at least 2.2 ml/g and in particular at least 4.5 ml/g (using: 50 gram product). The products obtained after baking displayed specific volumes of at least 3.5 ml/g and in particular at least 6 ml/g (again using: 50 gram product). We disclosed that such products can be obtained, when the flour-component of the dough is constituted of two components, i.e. 1) of a natural flour and 2) of an artificial flour. The artificial flour being composed of a protein, in particular a gelatin-relating compound and a modified starch. However, the above solutions only solve the problems for laminated dough systems. So far no solution was presented for brioche doughs, i.e. breaddoughs, containing appreciable amounts of fat and whole-egg.

Therefore, our invention concerns ready-to-bake, frozen, brioche dough, comprising:
- a flour-component, and (on flour):
   40 - 70 wt% of water
   10 - 30 wt% of fat
   2 - 15 wt% of whole egg
   3 - 10 wt% of yeast
   0.1 - 4.0 wt% of emulsifier
   wherein the flour-component is composed of:
   80 - 99 wt% of natural flour and
   20 - 1 wt% of "artificial flour"
   and wherein the artificial flour consists of:
   30 - 70 wt% of a protein, in particular a gelatin-relating compound and
   70 - 30 wt% of a modified starch,

As proteins can be used gluten, whey-proteins, egg-proteins and caseinates and mixtures thereof.

Very suitable products are obtained, when a gelatin-relating compound is applied, in particular if selected from the group, consisting of: gelatin with a bloom-rate of 50 - 400; non-gelling gelatin with a bloom-rate of 0 - 50; hydrolyzed gelatin and gelatin-precursors, such as collagen. In addition to above protein some amount of bread-improving carbohydrates, such as guar gum, xanthan gum or pectin can be added to the composition. Amounts of 0.01 - 3 wt % on flour will suffice.

The starch-component of our artificial flour must be a modified starch. Preferred modified starches are the heat-stable modified starches, in particular the cross-linked starches. A typical example being a cross-linked waxy maize starch, this starch can either be pregelatinized or not. Suitable modified starches can be selected from the following group (although not restricted to this group) Ultratex-2, Instant Clearjel, Pureflo, Thermflo, National 780188, Firmtex, Hiflo, National Frigex, National Frigex HV, National Frigex L.V.; Purity VL, Collflo 67, Purity HPC, Thermtex (all from National Starch); Clearam CH-30 (from Roquette) and from Avebe the Farinex-type products: VA 70; VA 100T; CAX;TK-1; VA 70 C or CA. Preferred modified starches are derived from waxymaize or from tapioca.

Although any emulsifier can be applied, we found that a beneficial effect on product performance is obtained, when the emulsifier comprises
- a DATA -ester, that provides baking performance to the dough, or
- a lecithin, or
- a mono fatty acid ester of sucrose, preferably having 2-20 C-atoms, or
- mixtures thereof.
The DATA-ester and the mixture with the lecithin provide in particular improved appearance to the baked products. Very suitable DATA-esters are those, that have a low saponification value (sap. value < 450). Other emulsifiers, such as monoglycerides can however also be applied.

The lecithin can be any known sort of lecithin, however, it is preferred to use lecithins that have a high phospholipid-content.

Other dough-improving ingredients, such as sugar, enzymes, in particular xylanase, amyloglucosydase and/or amylase, ascorbic acid and reducing agents, such as cysteine can also be incorporated in the dough. The amounts are effective amounts, which can be derived from the prior art. Ascorbic acid is used in slightly higher amounts of more than 25 pppm (on flour), preferably more than 75 ppm. Chemical leaveners can also be added. In particular in addition to yeast a mixture of sodium hydrogen carbonate, maleic acid and tartaric acid worked well.

It was found, that any fat, known as component for brioche-dough can be applied. However, we prefer to apply fats, derived from margarine with a hardness C according to Haighton (at 20°C) of at least 500.

The natural flour component of our doughs can be any flour, applicable according to the prior art in brioche dough systems. Preferred flours are strong flours, in particular the flours with at least 15 wt% protein on dry matter are preferred.

The ready-to-bake, frozen brioche doughs, according to our invention, produce upon baking of a sample of 55 g for 20-22 minutes at 170°C a product with a specific volume (s.v.) of at least 2.5 ml/g, preferably at least 3.5 ml/g; in particular at least 6 ml/g. Ovensprings, achieved during above baking of the frozen products, are at least 2.2 and most preferably at least 4.5. Overspring being defined as (Spec. Vol) after baking : (Spec. Vol) prior to baking.

It was found, that the above requirements for specific volume and ovenspring are easily fulfilled, when the frozen dough before baking has a specific volume of 0.7-1.6 ml/g, in particular 1.0-1.4 ml/g. These specific volumes can easily be obtained by fine-tuning of the dough-ingredients and the application of a resting time during the dough preparation.

The baked brioches, obtained after baking of a moulded part of the brioch dough according to the invention are also part of the invention.

### Examples

### 1. Recipe

| | K.grams |
|---|---|
| Flour | 100 |
| Water | 46 |
| Sugar | 12 |
| Bread improver (incl. carrier) | 1.03 |
| Salt | 2 |
| Modified starch | 4 |
| Gelatin | 2.4 |
| Gluten | 1 |
| Emulsifier | 0.3 |
| Fat | 12 |
| Whole-egg | 8 |
| Yeast | 8 |

58% of the flour, 66% of the water, 41% of the sugar, 50% of the salt and 62% of the yeast were mixed and kneaded in an spiral kneader (Kemper) during 60 seconds (slow) and 5 minutes (high speed). The dough-temperature was maintained at 25°C. The dough was rested during 80 minutes. The specific volume of the dough after resting was 4 ml/g. The rest of the components (except the yeast) were added and kneaded during 2 minutes (slow), followed by 11 minutes (high speed). The yeast was added between 5 and 7 minutes before finishing the kneading.

The dough, with a specific volume of 0.9 ml/g, was divided in blocks of 55 gr. These blocks were formed in ball shapes and rested for 8 to 10 minutes. Following the Brioches were formed in bars, painted with egg and a cut was made on the surface. The volume of the piece obtained was 0.9 ml/g. The piece was frozen to -18°C. The pieces were baked in a oven at 170°C during 20 to 22 minutes.

The Brioches obtained had a specific volume of 3.8 ml/g (so, the ovenspring was 4.22).

### 2. Recipe

| | wt % |
|---|---|
| Flour | 51.66 |
| Water | 23.25 |
| Sugar | 6.72 |
| Enzyme | 0.05 |
| Salt | 1.03 |
| Modified starch | 1.03 |
| Gelatin | 0.41 |
| Gluten | 0.52 |
| Emulsifier | 0.99 |
| Fat | 7.75 |
| Whole-egg | 1.29 |
| Yeast | 5.17 |
| Chem. Leavener | 0.13 |

All ingredients, except the yeast were mixed in a spiral kneader during 60 sec. (slow) and 20 min. (high speed). The dough temperature was maintained at 25 °C.
The yeast is added 5 min. before finishing the kneading. Final dough temperature 27 °C. The dough (with S.V. = 0.9) was fed to an automatic piston of a divider machine. Portions of 60 grams were formed (ball-shape with conical format). These pieces were rested for 10 min. The dough pieces were transported to a former machine producing balls of 13/15 cm. These pieces were rested for 20 min. (S.V. being 1,2 ml/g). The surface was cut with a knife. The dough-pieces were frozen at -18 °C. The frozen Brioches were baked in a convection-oven (20 min. / 170 °C), incorporating steam. The Brioche obtained had a SV of 3.5 ml/g (ovenspring 2.9).

## Claims

1. Ready-to-bake, frozen, brioche dough, comprising
- a flour-component, and (on flour):
40 - 70 wt% of water
10 - 30 wt% of fat
2 - 15 wt% of whole-egg
3 - 10 wt% of yeast, optionally combined with a chemical leavener
0.1 - 4.0 wt% of emulsifier
wherein the flour-component is composed of:
80 - 99 wt% of natural flour and
20 - 1 wt% of "artificial flour"
and wherein the artificial flour consists of:
30 - 70 wt% of a protein, in particular a gelatin-relating compound and
70 - 30 wt% of a modified starch,

2. Ready-to-bake, frozen brioche dough according to claim 1, wherein the gelatin-relating compound is selected from the group, consisting of: gelatin with a bloom-rate of 50 - 400; non-gelling gelatin with a bloom-rate of 0 - 50; hydrolyzed gelatin and gelatin-precursors, such as collagen.

3. Ready-to-bake, frozen brioche dough according to claims 1-2, wherein the modified starch is a cross-linked starch, in particular a cross-linked waxy maize starch.

4. Ready-to-bake, frozen brioche dough according to claims 1-3, wherein the emulsifier comprises:
- a DATA -ester, that provides baking performance to the dough, or
- a lecithin, or
- a mono fatty acid ester of sucrose, or
- a monoglyceride, or
- mixtures thereof.

5. Ready-to-bake, frozen brioche dough, according to claims 1-4, wherein the dough further comprises one or more of the following ingredients: carbohydrate bread improvers,sugar, enzymes, in particular xylanase amyloglucosidase, and/or amylase, ascorbic acid and reducing agents, in particular cysteine.

6. Ready-to-bake, frozen brioche dough, according to claims 1-5, wherein the fat is derived from a margarine with a hardness, according to Haighton of at least 500 at 20°C.

7. Ready-to-bake, frozen brioche dough, according to claims 1-6, which dough has a specific volume before baking of 0.7 - 1.6 ml/g, in particular 1.0 - 1.4 ml/g.

8. Ready-to-bake, frozen brioche dough according to claims 1-7, which dough produces upon baking for 22 minutes at 170°C a product with a specific volume (s.v.) of at least 2.5 ml/g preferably at least 3.5 ml/g; in particular at least 6 ml/g.

9. Ready-to-bake, frozen brioche dough according to claims 1-8, which dough displays upon baking for 22 minutes at 170°C an ovenspring of at least 2.2, in particular at least 4.5.

10. Baked brioche, produced after baking of a moulded part of the brioche dough according to claims 1-9.

## Patentansprüche

**1.** Backfertiger, gefrorener Hefekuchen- bzw. Briocheteig, umfassend eine Mehlkomponente und (bezogen auf das Mehl):
40-70 Gew.-% Wasser,
10-30 Gew.-% Fett,
2-15 Gew.-% Vollei,
3-10 Gew.-% Hefe, fakultativ kombiniert mit einem chemischen Treibmittel, und
0,1-4,0 Gew.-% eines Emulgators,
worin die Mehlkomponente besteht aus:
80-99 Gew.-% natürlichem Mehl und
20- 1 Gew.-% "künstlichem Mehl"
und worin das künstliche Mehl besteht aus:
30-70 Gew.-% eines Proteins, insbesondere einer gelatineähnlichen Verbindung, und
70-30 Gew.-% einer modifizierten Stärke.
**2.** Backfertiger, gefrorener Hefeteig gemäß Anspruch 1, in welchem die gelatineähnliche Verbindung aus der Gruppe ausgewählt ist, die besteht aus: Gelatine mit einer Bloomzahl von 50-400, nichtgelierender Gelatine mit einer Bloomzahl von 0-50, hydrolisierter Gelatine und Gelatinevorläufern, z.B. Collagen.
**3.** Backfertiger, gefrorener Hefeteig nach den Ansprüchen 1 und 2, in welchem die modifizierte Stärke eine vernetzte Stärke, insbesondere eine vernetzte Wachsmaisstärke, ist.

**4.** Backfertiger, gefrorener Hefeteig nach den Ansprüchen 1 bis 3, in welchem der Emulgator umfasst:
- ein DATA-Ester, der dem Teig Backverhalten verleiht, oder
- ein Lecithin oder
- einen Monofettsäureester von Saccharose oder
- ein Monoglycerid oder
- Mischungen davon.

**6.** Backfertiger, gefrorener Hefeteig nach den Ansprüchen 1 bis 4, in welchem der Teig ferner ein oder mehrere der folgenden Bestandteile umfaßt: Kohlenhydratbrotverbesserer, Zucker, Enzyme, insbesondere Xylanase, Amyloglucosidase und/oder Amylase, Ascorbinsäure und Reduktionsmittel, insbesondere Cystein.

**6.** Backfertiger, gefrorener Hefeteig nach den Ansprüchen 1 bis 5, in welchem das Fett aus einer Margarine mit einer Härte gemäß Haighton von mindestens 500 bei 20°C abgeleitet ist.

**7.** Backfertiger, gefrorener Hefeteig nach den Ansprüchen 1 bis 6, der ein spezifisches Volumen vor dem Backen von 0,7-1,6 ml/g, insbesondere 1,0-1,4 ml/g, aufweist.

**8.** Backfertiger, gefrorener Hefeteig nach den Ansprüchen 1 bis 7, der nach 22 Minuten langem Backen bei 170°C ein Produkt mit einem spezifischen Volumen (s.V.) von mindestens 2,5 ml/g, vorzugsweise mindestens 3,5 ml/g, insbesondere mindestens 6 ml/g, ergibt.

**9.** Backfertiger, gefrorener Hefeteig nach den Ansprüchen 1 bis 8, der nach 22 Minuten langem Backen bei 170°C ein Aufgehen von mindestens 2,2, insbesondere mindestens 4,5, zeigt.

**10.** Gebackenes Brioche, hergestellt nach Backen eines geformten Teils des Hefeteiges gemäß den Ansprüchen 1 bis 9.

## Revendications

1. Pâte à brioche congelée prête à cuire, comprenant :
- un composant farineux et (par rapport à la farine) :
40 - 70% en poids d'eau
10 - 30% en poids de graisse
2 - 15% en poids d'oeuf entier
3 - 10% en poids de levure, facultativement combinée avec un levain chimique
0,1 - 4,0% en poids d'émulsifiant
le composant farineux étant composé de :
80 - 99% en poids de farine naturelle et
20 - 1% en poids de "farine artificielle"
et la farine artificielle consistant en :
30 à 70% en poids d'une protéine, en particulier un composé apparenté à la gélatine et
70 à 30% en poids d'un amidon modifié.

2. Pâte à brioche congelée prête à cuire selon la revendication 1, dans laquelle le composé apparenté à la gélatine est choisi parmi la gélatine avec un degré bloom de 50 à 400 ; une gélatine non gélifiante avec un degré bloom de 0 à 50 ; une gélatine hydrolysée et les précurseurs de gélatine, comme le collagène.

3. Pâte à brioche congelée prête à cuire selon les revendications 1-2, dans laquelle l'amidon modifié est un amidon réticulé, en particulier un amidon de maïs cireux réticulé.

4. Pâte à brioche congelée prête à cuire selon les revendications 1-3, dans laquelle l'émulsifiant comprend :
- un DATA-ester qui assure les performances de cuisson à la pâte, ou
- une lécithine, ou
- un monoester d'acide gras de saccharose, ou
- un monoglycéride, ou
- leurs mélanges.

5. Pâte à brioche congelée prête à cuire selon les revendications 1-4, dans laquelle la pâte comprend en outre un ou plusieurs des ingrédients suivants : des hydrates de carbone d'amélioration du pain, des enzymes, en particulier la xylanase, l'amyloglucosidase et/ou l'amylase, l'acide ascorbique et des agents de réduction, en particulier la cystéine.

6. Pâte à brioche congelée prête à cuire selon les revendications 1-5, dans laquelle la graisse est dérivée d'une margarine avec une dureté selon HAIGHTON d'au moins 500 à 20°C.

7. Pâte à brioche congelée prête à cuire selon les revendications 1-6, cette pâte ayant un volume spécifique avant cuisson de 0,7 - 1,6 ml/g, en particulier 1,0 - 1,4 ml/g.

8. Pâte à brioche congelée prête à cuire selon les revendications 1-7, cette pâte produisant lors de la cuisson pendant 22 minutes, à 170°C un produit avec un volume spécifique (v.s) d'au moins 2,5 ml/g, de préférence au moins 3,5 ml/g, en particulier au moins 6 ml/g.

9. Pâte à brioche congelée prête à cuire selon les revendications 1-8, cette pâte montrant lors de la cuisson pendant 22 minutes à 170°C une élasticité au four d'au moins 2,2, en particulier au moins 4,5.

10. Brioche cuite, produite après cuisson d'une partie moulée de la pâte à brioche selon les revendications 1-9.
